# EUROPEAN PATENT SPECIFICATION

(11) **EP 1 892 064 B1**
(45) Date of publication and mention of the grant of the patent: **03.03.2010**
(21) Application number: 07015966.0
(22) Date of filing: 14.08.2007
(51) Int. Cl.: B25J 19/00, B25J 17/00

(54) **Drive mechanism for industrial robot arm**
Antriebsmechanismus für Industrieroboterarme
Mécanisme d'entraînement pour bras de robot industriel

(30) Priority: 24.08.2006 JP 2006228081; 15.11.2006 JP 2006309396
(43) Date of publication of application: 27.02.2008
(73) Proprietor: FANUC LTD, Minamitsuru-gun, Yamanashi 401-0597 (JP)
(72) Inventor: Inoue, Toshihiko, Fujiyoshida-shi Yamanashi 403-0017 (JP); Nakayama, Kazutaka, Minamitsuru-gun Yamanashi 403-0023 (JP); Iwayama, Takatoshi, Minamitsuru-gun Yamanashi 401-0511 (JP)
(74) Representative: Thum, Bernhard

(56) References cited:
- EP-A- 0 535 604
- EP-A- 0 593 786
- EP-A- 1 010 499
- EP-A- 1 531 029

## Description

### BACKGROUND ART

### 1. TECHNICAL FIELD

The preset invention relates to a drive mechanism used for an arm of an industrial robot.

### 2. DESCRIPTION OF THE RELATED ART

When an industrial robot is used for an operation, the robot is required to be provided with an umbilical member including a cable and/or a tube for transmitting power or a signal to an end effector attached to the end of a wrist element of the robot. When the umbilical member is arranged around the wrist element of a robot arm, the umbilical member may come into contact with the arm or other equipment and may be worn or damaged. In order to avoid such a problem, several configurations has been proposed.

For example, Japanese Unexamined Patent Publication No. 2004-358649 discloses an industrial robot having a wire feeder arranged at the rear side of an upper arm, such that the wire feeder, the upper arm and a wrist element are aligned generally in a straight line when the wrist element is in a horizontal position. Also, Japanese Unexamined Patent Publication No. 2005-96073 discloses a configuration in which a cable is drawn from a body through a hole and arranged on an end effector, the hole being arranged at the position where the cable intersects a first axis of the body.

Further, the applicant of the present invention has proposed, in Japanese Unexamined Patent Publication No. 2006-15360, a configuration in which a wire feeder is arranged on a place other than a forearm so as to simplify the structure of the forearm, whereby a large interference area is not generated on the rear and upper part of the robot. The applicant has also proposed, in Japanese Unexamined Patent Publication No. 2006-51581, a configuration in which a hollow speed reducer is arranged between a forearm and a first wrist element, such that the motion of an umbilical member is not greatly changed even when the orientation of a work tool is greatly changed by the motion of the wrist element, whereby the stress applied to a wire or a tube constituting the umbilical member may be reduced.

In an industrial robot of the prior art, when a device (for example, a wire feeder) for a work tool, such as a welding torch is mounted on the arm of a robot, a motor for swinging or rotating the forearm may be an obstacle, resulting in the mounting area of the device for the work tool being limited. Therefore, when the device for the work tool is mounted, it cannot always be mounted on an optimum place. As a result, usability of the robot may be deteriorated, because the umbilical member may project laterally from the forearm and/or the device for the work tool may project from the rear side of the forearm.

In the configuration of Japanese Unexamined Patent Publication No. 2004-358649, for example, the device for the work tool, such as the wire feeder may be positioned at the rear side of the forearm, such that the device does not widely project out. However, since a motor for rotating the forearm is positioned near the device, the adjustment of the device in the direction parallel to an U-axis is limited in terms of interference. Further, since the device is compactly positioned in a narrow space, it is difficult to carry out maintenance of the device. In particular, in a device such as a wire feeder, which is regularly checked or inspected, it may be a significant problem to perform maintenance on the device. The above patent documents do not optimize the configuration around the forearm where the device for the work tool is positioned, taking maintenance of the device into consideration.

Also, when the device such as the wire feeder, for controlling the work tool on the front end of the wrist of the robot, is positioned at the rear side of the forearm, the umbilical member, such as a torch cable connected to the work tool, may be positioned in a hollow portion of the forearm to avoid interference with external equipment. However, since there are various kinds of umbilical members, which cannot be contained in the robot arm when the umbilical member has a large diameter, and when the umbilical member cannot be easily twisted, or when the umbilical member is drawn from an in adequate position of the device for controlling the work tool. Therefore, it is necessary to constitute a robot having a forearm suitable for each arrangement of the umbilical member.

EP 1 531 029 A1 discloses a robot system comprising a hand attached to a wrist of a robot, a forearm having a hollow structure, a visual sensor, a cable member and a sensor controller. A driving operation of drive motors provided for respective control axes of the robot and the driving operation of the hand attached to the wrist are controlled by a robot controller. The robot system further comprises umbilical members, which include the control cable for the hand and the control cable for the drive motor passing through a protective tube inside the hollow structure of the forearm.

### SUMMARY OF THE INVENTION

An object of the present invention is to provide a drive mechanism for a robot arm having a simple drive system, in which the extracting part of an umbilical member for a work tool is suitably positioned and a device for the work tool is positioned on the forearm so as not to widely project out, in which the basic configuration of the robot arm may be similar to prior art.

Further, another object of the invention is to provide a drive mechanism for a robot arm, in which the umbilical member may extend through a hollow portion of the forearm or be arranged along the outside of the forearm, selectively, when the umbilical member has a large diameter, when the umbilical member cannot be easily twisted, or when the umbilical member is drawn from an in adequate position of the device for controlling the work tool.

According to the present invention, there is provided a drive mechanism for a robot arm according to the features of claim 1. This drive mechanism comprises: an upper arm; a forearm connected to the front end of the upper arm and rotatable about a first axis generally perpendicular to the longitudinal direction of the upper arm; a first wrist element connected to the front end of the forearm and rotatable about a second axis generally coinciding with the longitudinal direction of the forearm and having a hollow portion through which the second axis extends; a work tool positioned on the front side of the first wrist element; a control device for the work tool, to which an umbilical member for supplying power, a signal or material to the work tool is connected; and a motor and a speed reducer for rotating the first wrist element, the motor and the speed reducer being positioned in the forearm, wherein the motor for the first wrist element is positioned in the area between the forearm and the upper arm, such that the rotation axis of the motor is perpendicular to the second axis and positioned nearer the front end of the forearm in relation to the first axis, and wherein the umbilical member is arranged between the control device for the work tool and the work tool, such that the umbilical member extends either through the hollow portion of the first wrist element or along the outside surface of the first wrist element.

Preferably, the forearm has an L-shaped recess viewed in the direction of the first axis, the recess having a bottom portion and a vertical portion constituting the recess, the motor and the speed reducer for the first wrist element being positioned on the vertical portion of the recess, and a motor and a speed reducer for the forearm being positioned on the bottom portion of the recess.

Concretely, the speed reducer for the first wrist element has at least one set of hypoid gears including an input hypoid gear and an output hypoid gear, the output hypoid gear being positioned coaxially with the second axis and connected to the first wrist element, the input hypoid gear being connected to the motor for the first wrist element via a power transmission shaft extending generally perpendicular to the surface of the bottom portion of the forearm.

The lateral side of the motor for the first wrist element in relation to the first axis is preferably covered by a part of the forearm.

The drive mechanism may further comprise a second wrist element connected to the first wrist element and rotatable about a third axis generally orthogonal to the second axis; and a third wrist element connected to the second wrist element and rotatable about a fourth axis generally orthogonal to the third axis, the work tool being attached to the third wrist element. In this case, it is advantageous that the first, second and third wrist elements are positioned such that the second, third and fourth axes intersect at one point.

The first wrist element is preferably configured to be axisymmetrical in relation to the second axis.

The drive mechanism may further comprise a cable within a mechanical unit of the robot, connected to the control device. In this case, it is advantageous that the cable is drawn from the lateral side in the upper part of the upper arm and introduced into the mechanical unit at the lateral side of the forearm, near a connecting point of the vertical and bottom portions of the forearm.

Preferably, the first wrist element has a hollow portion provided with a surface inclined relative to the second axis.

### BRIEF DESCRIPTION OF THE DRAWINGS

The above and other objects, features and advantages of the present invention will be made more apparent from the following description of the preferred embodiments thereof, with reference to the accompanying drawings, wherein:
Figs. 1a and 1b are front and right side views, respectively, of an industrial arc welding robot having a robot arm drive mechanism according to the invention;
Fig. 2 is a sectional view of a torch cable;
Figs. 3a, 3b and 3c are top, side and front views, respectively, of the configuration around a forearm;
Fig. 4a is a view indicating the motion of the umbilical member, arranged along the outside of a first wrist element, during the rotation of the first wrist element;
Fig. 4b is a view indicating the state in which the first wrist element rotates by 90 degrees from the state of Fig. 4a;
Fig. 4c is a view indicating the state in which the first wrist element further rotates by 90 degrees from the state of Fig. 4b;
Fig. 5a is a view indicating the motion of the umbilical member, arranged along the outside of a first wrist element, during the rotation of a second wrist element;
Fig. 5b is a view indicating the state in which the second wrist element rotates by 90 degrees from the state of Fig. 5a;
Fig. 5c is a view indicating the state in which the second wrist element further rotates by 90 degrees from the state of Fig. 5b;
Fig. 6 is a view indicating the state in which the first wrist element is reversed;
Fig. 7 is a view indicating the state in which the umbilical member is drawn within a hollow portion of the first wrist element;
Fig. 8a is a view indicating the motion of the umbilical member, drawn within the first wrist element, during the rotation of the first wrist element;
Fig. 8b is a view indicating the state in which the first wrist element rotates by 90 degrees from the state of Fig. 8a;
Fig. 8c is a view indicating the state in which the first wrist element further rotates by 90 degrees from the state of Fig. 8b;
Fig. 9a is a view indicating the motion of the umbilical member, drawn within the first wrist element, during the rotation of the second wrist element;
Fig. 9b is a view indicating the state in which the second wrist element rotates by 90 degrees from the state of Fig. 9a;
Fig. 9c is a view indicating the state in which the second wrist element further rotates by 90 degrees from the state of Fig. 9b;
Fig. 10 is a view indicating an example in which the placement of the wire feeder is changed;
Fig. 11 is a view indicating another example in which the placement of the wire feeder is changed;
Fig. 12a is a side sectional view indicating a motor and a speed reducer for the first wrist element positioned in the forearm;
Fig. 12b is a sectional view indicating the configuration of Fig. 12a viewed from the back; and
Figs. 13a and 13b are front and right side views, respectively, of an industrial handling robot having a robot arm drive mechanism according to the invention.

### DETAILED DESCRIPTION

The invention will be described with reference to the drawings.

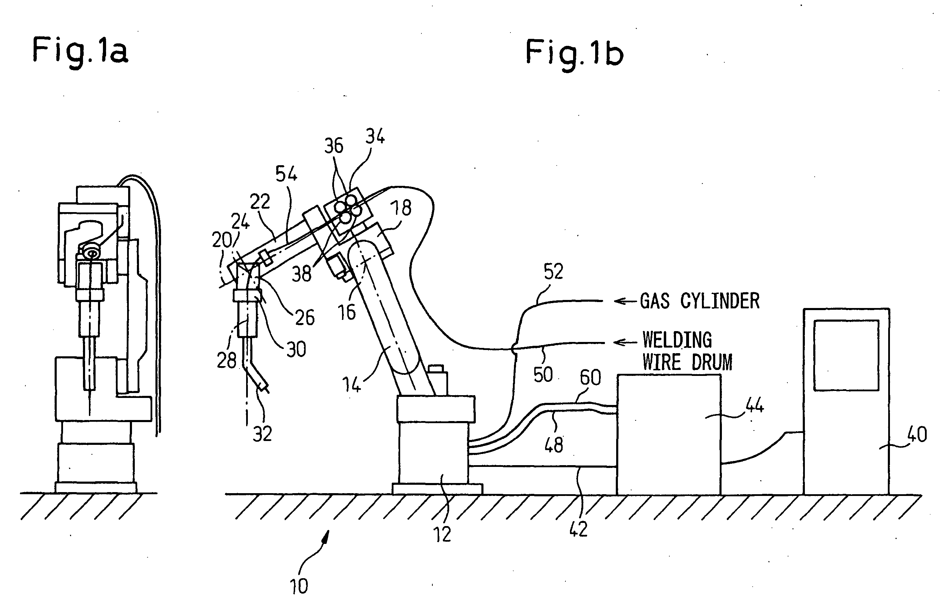

Figs. 1a and 1b are front and right side views, respectively, of an industrial arc welding robot system having a welding torch as a work tool, as a robot arm drive mechanism according to a first embodiment of the invention.

A robot 10 is an arc welding robot having six-degrees, having a base 12, an upper arm 14 arranged on the base 12, and a forearm 14 arranged on the front end of the upper arm 14 and rotatable about a first axis 16 generally perpendicular to the longitudinal direction of the upper arm 14. The forearm 18 has a first wrist element 22 mounted to the front end of the forearm and rotatable about a second axis 20 generally coinciding with the longitudinal direction of the forearm 18, a second wrist element 26 mounted to the front end of the first wrist element 22 and rotatable about a third axis 24 perpendicular to the second axis 20, and a third wrist element 30 mounted to front end of the second wrist element 26 and rotatable about a fourth axis 28 generally coinciding with the longitudinal direction of the second wrist axis 26. A welding torch 32 is attached to the front end of the third wrist element 28. The forearm 18 has a wire feeder 34 for supplying a welding wire as described below to the welding torch 32. The wire feeder 34 has a set of rollers including a drive roller 36 and a driven roller 38. The set of rollers may feed the wire by driving the drive roller 36 using a wire feeder motor (not shown), when the wire is nipped between the rollers.

A robot controller 40 send a command to the arc welding robot 10 via a robot control cable 42, so as to control servomotors (not shown), each of which is associated with each driving part of six-axes of the robot 10, whereby the position and the orientation of the welding torch 32 may be changed for welding a workpiece. A welding current to be fed to the welding torch 32 is supplied by a welding power source 44 via a conductive material 60 for the welding current. The robot controller 40 controls the welding power source 44, as well as the servomotors of the robot 10, whereby the welding torch 32 may perform a welding operation according to a predetermined condition, in synchronization with the motion of the robot 10. The robot controller 40 also sends a control signal and power to the wire feeder 34, via a wire feeder control cable 48, which connects the welding power source 44 and the wire feeder 34. A part of the signal may be used for a feedback.

As shown in Fig. 1b, the first, second and third wrist elements 22, 26 and 30 are preferably arranged such that the second, third and fourth axes 20, 24 and 28 intersect at one point. Due to this, even when the first wrist element 22 is rotated 180 degrees such that an umbilical member 54 as shown in Fig. 1b is moved to an opposite side in relation to the first wrist element 22, the orientation of other element (in particular, the welding torch 32) is not substantially changed.

A wire conduit 50, including a welding wire supplied from a welding wire drum or a wire reel (not shown), is connected to the welding torch 32 via the wire feeder 34. Also, a gas tube 52, supplying assist gas from a gas cylinder (not shown), and a conductive material 60, supplying the welding current from the welding power source, are drawn through a mechanical unit of the robot and connected to the welding torch 32 via the wire feeder 34. Alternatively, the gas tube 52 and the conductive material 60 may be directly connected to the wire feeder 34 from the outside, as in the wire conduit 50. Further, a water-cooled tube (not shown) may be connected to the welding torch 32. Hereinafter, an umbilical member, such as a wire or a tube for connecting the torch 32 and the wire feeder 34 are collectively referred to as a "torch cable 54".

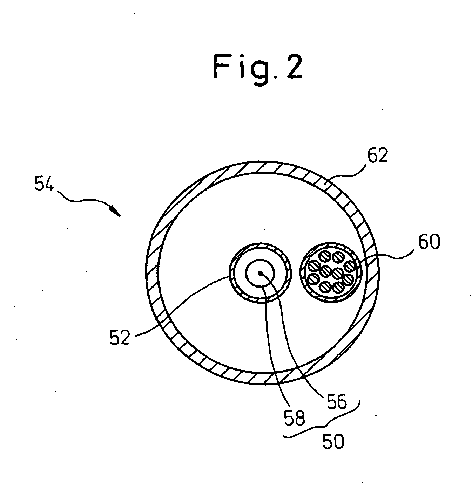

Fig. 2 shows a preferable cross-section of the torch cable 54. As shown, the assist gas tube 52 is arranged outside of and coaxially with the wire conduit 50 constituted by a welding wire 56 and a liner 58. The gas tube 52 and the conductive material or the multicore cable 60 are contained in a flexible tube 62, constituting the torch cable 54.

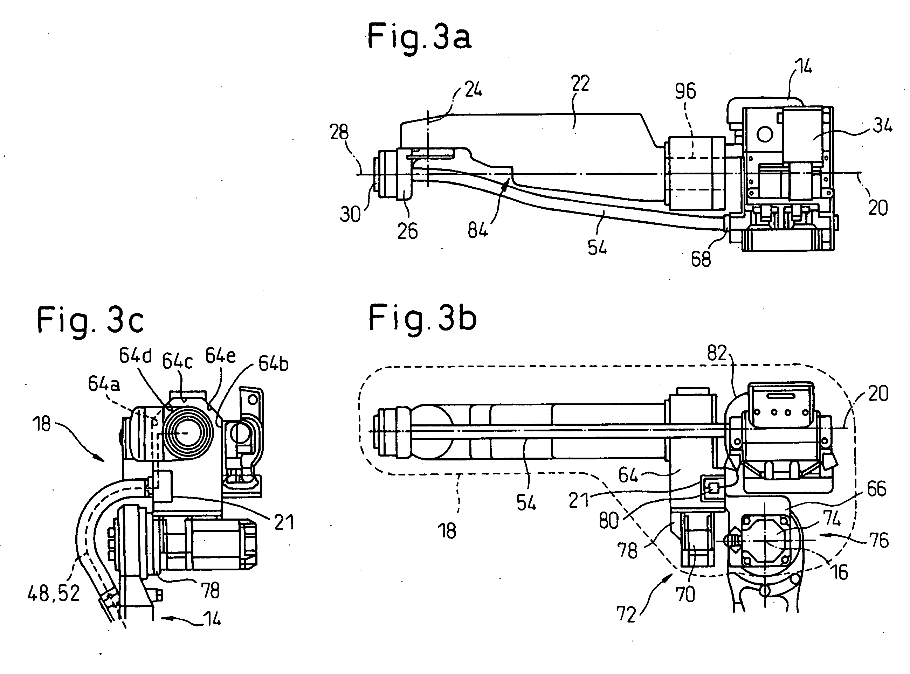

Figs. 3a, 3b and 3c are top, side and front views, respectively, of the detail of the forearm 18. The forearm 18 has a first portion or a vertical portion 64 and a second portion or a bottom portion 66, the longitudinal directions of which are nearly orthogonal to each other, when viewed in the direction of the first axis 16 (Fig. 3b). In other words, the vertical and bottom portions 64 and 66 cooperatively constitute a generally L-shaped recess. The first wrist element 22 is connected to the vertical portion 64, and the wire feeder 34 is positioned on the bottom portion 66. As shown in Fig. 2, the welding wire 56 is positioned generally at a center of the torch cable 54, in the radial section of the torch cable. Most torch cables have such a constitution, since the curvature radius of the wire 56 is necessary to be larger than that of other umbilical member in the torch cable. Therefore, the power cable and the assist gas tube or the like are positioned around the welding wire. Accordingly, the torch cable 54 is connected to the wire feeder 34 such that the center of the torch cable corresponds to the point where the welding wire 56 is fed from the wire feeder 34. Further, the torch cable 54 is drawn from a wire extracting portion 68 of the wire feeder 34 toward the front end of the wrist element. The torch cable 54, drawn toward the front end of the wrist element, is connected to the third wrist element 30, after extending near the second axis 20 along the forearm 18.

The wire feeder 34 may have the various configuration, depending on a maker of the wire feeder. The feed point of the welding wire in the arc welding robot is determined depending on the configuration of the wire feeder 34 and the location of the wire feeder on the bottom portion 66 of the forearm 18. Therefore, in order to use various types of wire feeders, the area for the wire feeder on the bottom portion 66 of the wire forearm 18 is preferably as large as possible. In the example of Fig. 3, as the forearm 18 is configured to form the L-shaped recess, the position of the wire feeder 34 is adjustable in the up and down direction in a top view or Fig. 3a (i.e., the horizontal direction in effect), and further, there is a dimensional margin in the up and down direction in a side view or Fig. 3b (i.e., the vertical direction in effect). Therefore, there is a lot of flexibility of the placement of the wire feeder 34. Due to this, even when the different wire feeder is used, the feed point of the wire may be positioned at the same point in relation to the forearm 18.

As shown in Fig. 3b, on the vertical portion 64 of the forearm 18, a motor 70 for the first wrist element and drive unit 72 for the first wrist element including a speed reducer or a hypoid gear for the first wrist element are arranged. On the other hand, on the bottom portion 66 of the forearm 18, a motor 74 for the forearm and drive unit 76 for the forearm including a speed reducer are arranged. The lateral side of the motor 70 for the first wrist element in relation to the first axis 16 is covered by a rib 78 or a part of the forearm 18. Due to this, the part of the forearm 18 may effectively reduce a bend stress in the forearm 18 generated by the rotating motion thereof. Further, by covering the both sides of the motor 70 in relation to the first axis 16, by using the part of the forearm 18, the motor 70 may be protected even when the motor 70 interferes with external equipment around the robot.

The cable 48 for controlling the wire feeder 34 and the gas tube 52, as shown in Fig. 1b, have good flexibility and torsionability in comparison to the conductive material 60, and therefore, the cable 48 and the tube 52 may be easily incorporated in the mechanical unit of the robot 10. In detail, the cable 48, extending from the power source 44, is introduced to the rear side of the forearm 18, after passing through the base 12 and the upper arm 14. At this point, as shown in Fig. 3c, the cable 48 and the tube 52 are once extracted from the upper side of the upper arm 14, and introduced again into the mechanical unit at the lateral side of the forearm 18 near the connection between the vertical and bottom portions 64 and 66 of the forearm. Also, the cable in the mechanical preferably extends through a notch 21 arranged in the forearm 18. By positioning the cable through the notch 21, the cable may be connected to the wire feeder 34 without being exposed from the forearm 18. In other words, as shown in Fig. 3b, the cable 48 is connected to a connector 80 arranged on the vertical portion 64 of the forearm 18, such that the cable 48 cannot be an impediment to the placement of the wire feeder 34 on the forearm 18 and the arrangement of the torch cable 54 on the side of the forearm 18 near the upper arm 14. The connector 80 is connected to the wire feeder 34 via a junction cable 82. Alternatively, the cable contained in the robot arm may be directly connected to the wire feeder 34, without using the junction cable.

Due to the configuration of the cable within the mechanical unit, even by a simple handling of the cable, the umbilical member 54 and the cable in the mechanical unit 48, 82 do not interfere with each other, while retaining the sufficient range of movement of the forearm 18. In other words, since the cable in the mechanical unit is secured to the side surface of the forearm 18 including the first axis 16, even when the wire feeder 34 is positioned on the rear side of the forearm 18 and the umbilical member 54 is arranged along the side of the forearm, the umbilical member extending from the wire feeder 34 is prevented from interfering with the cable in the mechanical unit. Even when the forearm 18 is rotated relative to the upper arm 14, the interference is also prevented, since the umbilical member is apart from the cable by a certain distance. Therefore, the work tool control device such as the wire feeder 34 may be freely positioned on the rear side of the forearm.

Also, as shown in Fig. 3c, it is preferable that the distances between the second axis 20 and each inner surface 64a, 64b and 64c of the vertical portion 64 of the forearm 18 are the same. Due to this, in every case that the umbilical member 54 is arranged along the inner surface 64a, 64b or 64c, the umbilical member may be handled in the substantially same way (concretely, the umbilical member is rotationally symmetric about the second axis 20). Further, by chamfering the upper corners of the vertical portion 64 of the forearm 18, all of the inner surfaces 64a, 64b and 64c and newly formed inner surfaces 64d and 64e may have the same distance in relation to the second axis 20.

In the present invention, as described above, the motor 70 for the first wrist element 22 is arranged in the area between the forearm 18 and the upper arm 14, such that the rotation axis of the motor 70 is perpendicular to the second axis 20. Further, the motor 70 is positioned at a point which is shifted, in relation to the first axis 16, toward the front end of the forearm or the wrist element along the longitudinal direction of the forearm 18, whereby the wide space may be obtained above the forearm drive unit 76 positioned on the bottom portion 66 of the forearm 18. Therefore, the wire feeder 34 may be mounted on the forearm 18, such that the torch cable 54 drawn from the extracting portion 68 does not widely project from the lateral side of the forearm 18, and further, the wire feeder 34 itself does not widely project from the rear side of the forearm 18.

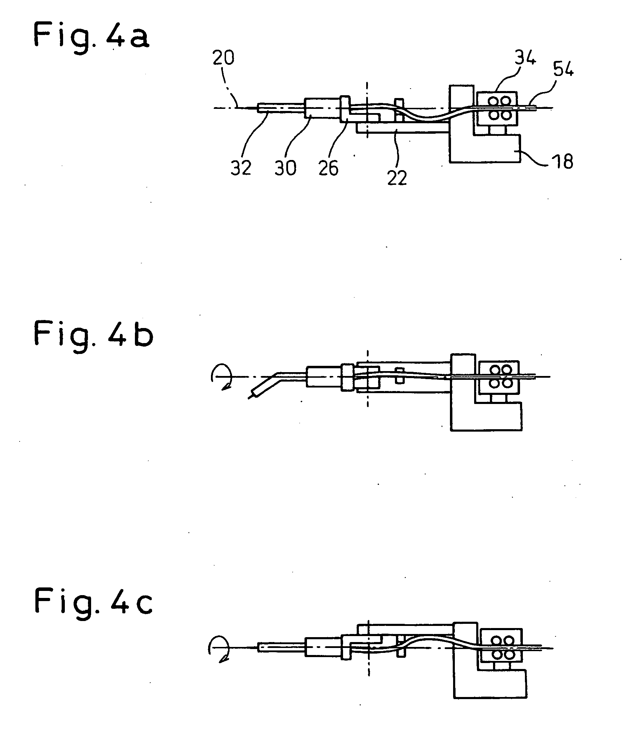

Next, the motion of the robot arm drive mechanism having the above configuration will be explained. As shown in Fig. 4a schematically showing the forearm 18, the umbilical member such as the torch cable 54, drawn toward the front end of the wrist element, is introduced to the front end of the wrist element along the forearm 18, extends near the second axis 20 and is connected to the third wrist element 30. Even when the first wrist element 22 is rotated 90 or 180 degrees, as shown in Fig. 4b or 4c, the torch cable 54 is along or winds around the first wrist element 22, whereby it does not interfere with external equipment.

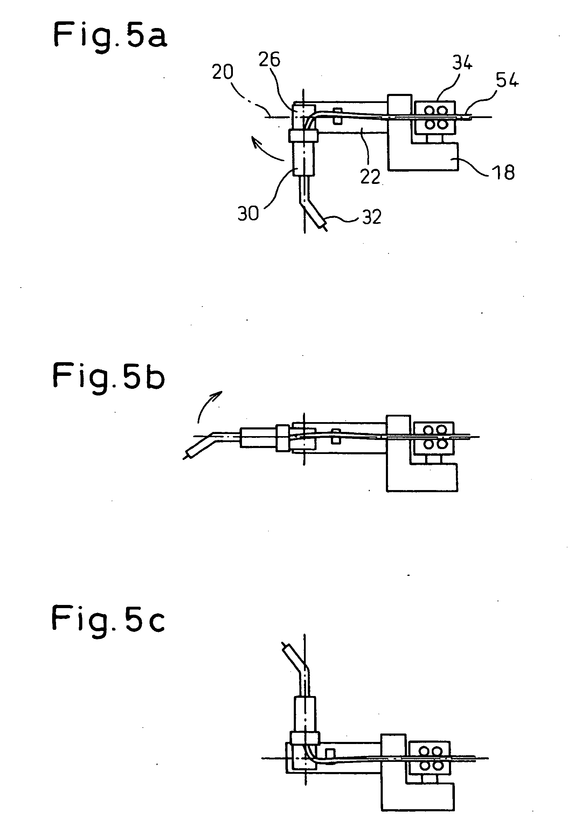

On the other hand, when the second wrist element 26 is rotated, as shown in Figs. 5a to 5c, the torch cable 54 bends just ahead of the second wrist element 26 after extending near the second axis 20, whereby it does not project outward. Also, when the third wrist element 30 is rotated, since the rotation axis of the third wrist element 30 generally coincides with the longitudinal direction of the welding torch 32, the torch cable 54 is substantially subjected to the twisting effect only.

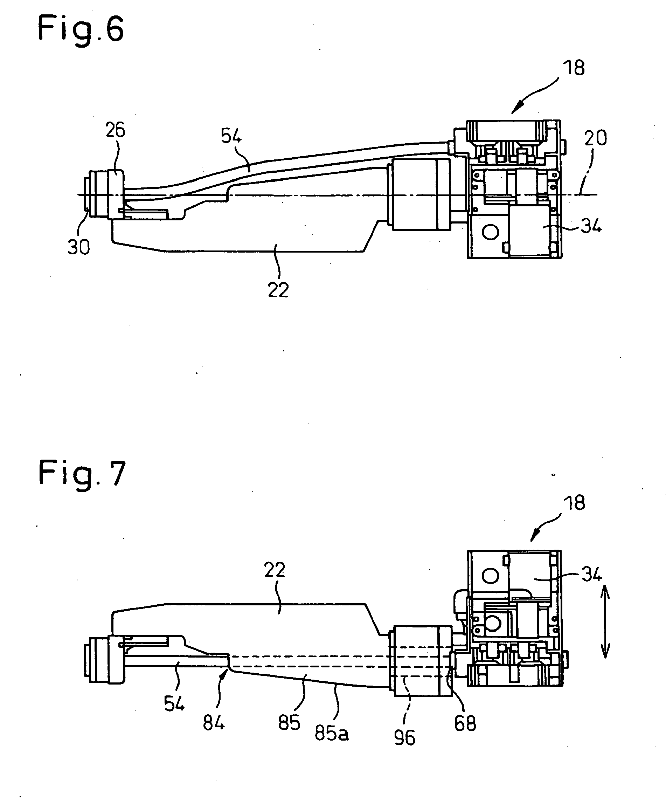

Fig. 3c indicates an example in which the feeding position of the welding wire is located on the right side of the wire feeder 34, viewed from the front side. However, the feeding position may be changed to the left side of the wire feeder. In this case, this change may be compensated by moving the wire feeder in the up and down direction in Fig. 3a, however, the wire feeder may project outward from the upper arm 14. In such a case, it may be effective to arrange the torch cable 54 after inverting (or rotating by 180 degrees) the first wrist element 22, as shown in a top view or Fig. 6. In other words, by arranging the forearm 18 such that the forearm 18 is symmetric to the arrangement of Fig. 3a in relation to the up and down direction, and by arranging the wire feeder 34 such that the connecting point of the torch cable 54 to the wire feeder is symmetric in relation to the second axis 20, the motion of the torch cable 54 may be the same as that of in Fig. 3a when the first wrist element 22 is rotated 180 degrees. In this case, the first wrist element 22 is rotated 90 degrees when the torch cable is drawn in the upper side of the forearm.

Within the forearm, a control cable (not shown) for drive motors of the second and third wrist elements is contained. When this control cable has sufficient torsion strength, the control cable may be used without being reassembled, by changing the reference position of the first wrist element 22 without reassembling the torch cable. On the other hand, since it is generally necessary to carry out periodical maintenance of the umbilical member, such as the torch cable 54, the umbilical member is configured to be easily reassembled. Therefore, even when slack of the umbilical member is generated, the umbilical member may be easily adapted to the robot arm by reassembling.

Also, when the motion of the robot is changed so as to replace a workpiece to be handled, after the system including the robot is activated, offline programming may be carried out such that the robot arm is returned to the initial position at the time of modifying the robot program. Due to this, a workload for arranging the umbilical member may be reduced and the applicable degree of freedom of the robot may be significantly increased. Further, by previously registering some patterns of the arrangement of the umbilical member including the initial position thereof, an optimum offline program, including the handling of the umbilical member, may be prepared when an user just selects one pattern at the time of offline programming.

In Figs. 3a to 6, the torch cable 54 extends along the lateral side of the first wrist element 22. As shown in Fig. 3a, the first wrist element 22 has a hollow hole 84, through which the second axis 20 extends and the torch cable 54 may extend. Also, an output element (for example, a hypoid gear as described below) of the first wrist element 22 has a hollow hole 96. Therefore, as shown in Fig. 7, the torch cable 54 may extend through the hollow holes 84 and 96. Since the mounting position of the wire feeder 34 may be freely adjusted in the direction indicated by the arrow in Fig. 7, the embodiment of Fig. 7 may be constituted by using the same robot arm as that of Fig. 3. Also, the wire feeder 34 may be rotated (not shown), before being mounted, in a plane perpendicular to the extending direction of the vertical portion of the forearm. Due to this, the position of the extracting portion 68 of the wire feeder 34 and the extracting direction of the torch cable 54 may be suitably changed. In general, the motion of the torch cable may be greatly changed, depending on either the orientation of the robot during welding or the characteristic of the torch cable. However, according to the invention, the torch cable may be suitably arranged so as to adapt to various systems.

As shown in Fig. 7, the hollow hole 84 is formed in the first wrist element 22, a middle portion 85 defining the hollow hole 84 advantageously has an inclined plane 85a, which is inclined against the second axis 20 and has a conical surface. Due to this, even when the umbilical member such as the torch cable extends along the lateral side of the first wrist element 22, without passing through the hollow portion 84, the umbilical member gradually extends to the second axis 20, whereby the umbilical member may smoothly wind around the first wrist element 22 without being subjected to large stress, when the first wrist element 22 is rotated. Further, since the cross sectional area of the first wrist element becomes larger towards the forearm, the stiffness of the first wrist element may be ideally designed.

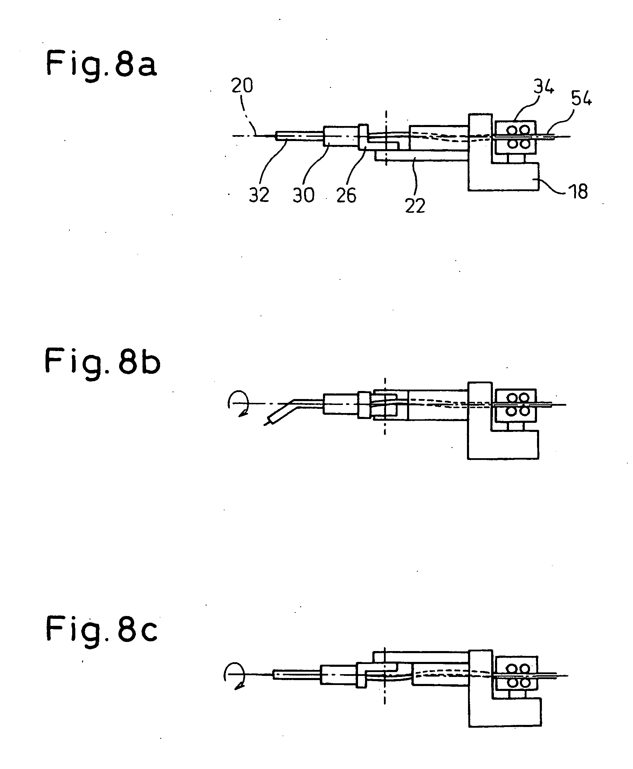

Figs. 8a to 8c schematically show the forearm 18, similar to Figs. 4a to 4c. As shown in Fig. 8a, the umbilical member such as the torch cable 54, drawn toward the front end of the wrist element, is introduced to the front end of the wrist element through the hollow hole 84 of the first wrist element 22, extends near the second axis 20 and is connected to the third wrist element 30. Even when the first wrist element 22 is rotated 90 or 180 degrees, as shown in Fig. 8b or 8c, the torch cable 54 is generally along the second axis 20, whereby the torch cable 54 may absorb the rotational motion by being twisted.

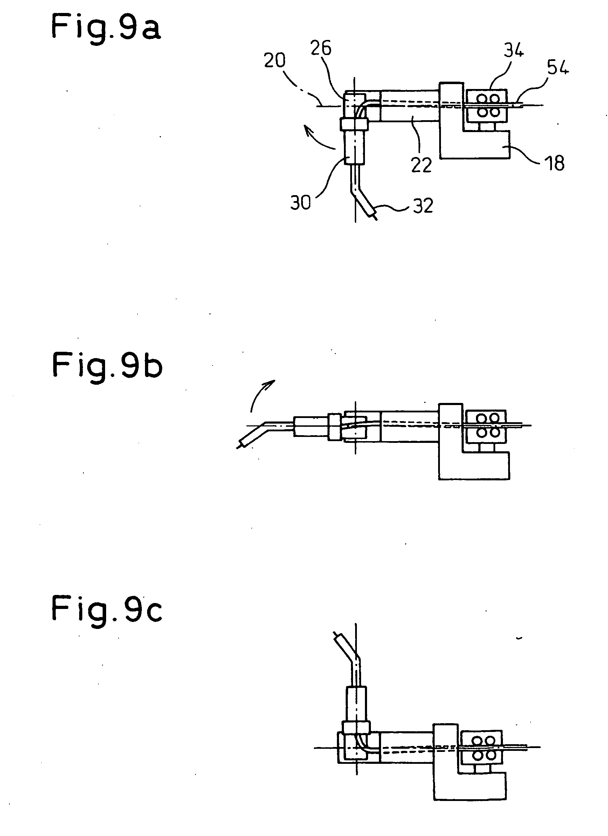

On the other hand, when the second wrist element 26 is rotated, as shown in Figs. 9a to 9c similar to Figs. 5a to 5c, the torch cable 54 is drawn near the second axis 20 and is bent before the second wrist element 26. Therefore, the rotational motion may be absorbed by bending of the cable. When the third wrist element 30 is further rotated, the third wrist element is rotated generally about the longitudinal direction of the welding torch 32, whereby only the torsional force is applied to the torch cable 54. In the invention, since the wire feeder 34 is located at the optimum position on the forearm 18, the extracting portion as described above may be freely selected.

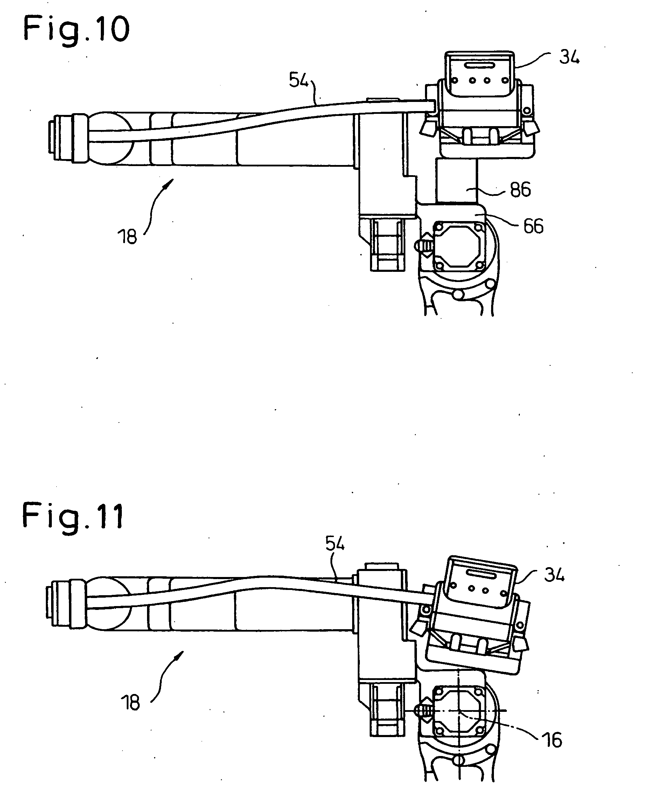

Fig. 10 is a side view similar to Fig. 3b, and shows an example of the adjustment of the mounting position of the wire feeder 34 in the direction generally perpendicular to the surface of the bottom portion 66 of the forearm 18. In this example, the position of the wire feeder 34 is raised by means of a spacer 86. This position is effective when the extracting portion 68 of the wire feeder 34 is to be positioned higher than the center of the forearm 18, in order to raise the curvature of the torch cable 54 for improving the feeding performance of the wire in a flat position welding.

Fig. 11 is also a side view similar to Fig. 3b, and shows the state in which the wire feeder 34 is rotated about the first axis 16. This state is effective when the torch cable 54, which sags from the forearm 18 by gravity, may interfere with external equipment or the like.

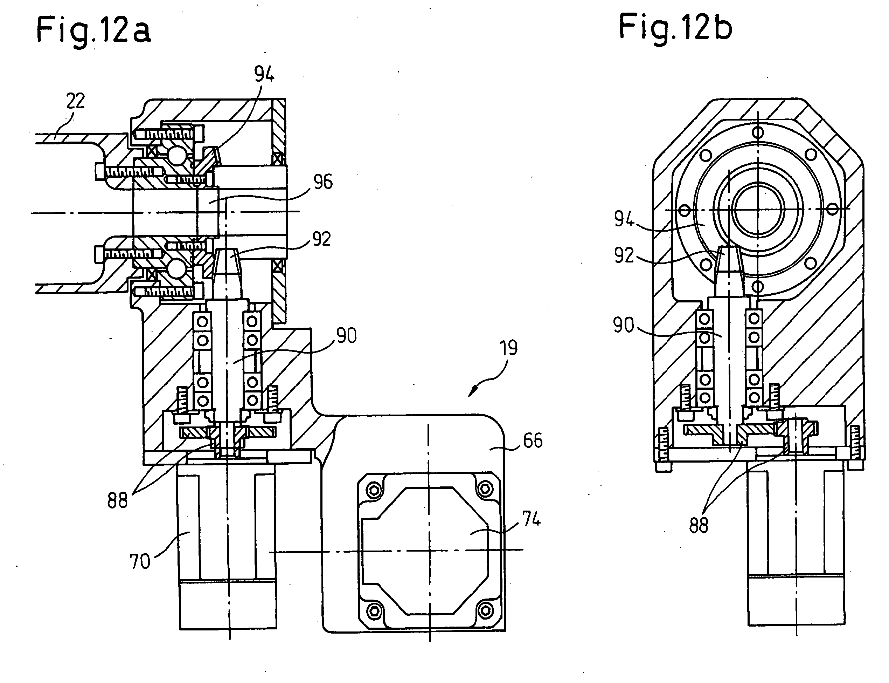

Figs. 12a and 12b are sectional views, viewed from the side and back, respectively, of the forearm 18 having a rotation drive mechanism of the first wrist element 22 or the main part of the invention. The rotation torque of the motor 70 for the first wrist element 22 arranged on the forearm 18 is transmitted to an input hypoid gear 92 via a set of spur gears or helical gears 88 and a power transmission shaft 90. Then, the rotation torque rotates the first wrist element 22 fixed to an output hypoid gear 94 engaged with the input hypoid gear 92. A plurality of sets of spur gears or the helical gears 88 may be used, however, it is preferable to use one set of gears to simplify the structure of the gears. Due to such a configuration, the motor 70 for the first wrist element is prevented from widely projecting from the rear side of the forearm 18, whereby the large mounting area of the wire feeder 34 on the bottom portion 66 of the forearm 18 may be obtained. The output gear 94 is coaxial with the second axis 20 and has a hollow hole 96 at the center portion thereof. Within the hollow hole 96, a not shown control cable for not shown motors for the second and third wrist element and other necessary cables may be arranged. By using the above set of spur gears or helical gears, a large reduction ratio may be obtained and the optimum position of the motor may be easily determined. However, it is possible to constitute a drive system by means of only one set of hypoid gears. The hypoid gear may be replaced with a bevel gear or the like, however it is preferable to use a hypoid gear because a high reduction ratio may be obtained, the size of a driving section may be minimized, and the noise level be relatively low.

The poser transmission shaft 90 extends generally perpendicular to the bottom portion 66 of the forearm 18, as shown, so as to connect the spur gear 88 to the input hypoid gear 92. Accordingly, even when the size of a flange of the motor 70 is large, as the motor 70 is positioned near the bottom portion 66, the length of the vertical portion 64 of the forearm 18 may be easily increased by extending the shaft 90. By increasing the length of the vertical portion 64, a wider area may be obtained above the bottom portion 66.

In a robot of the prior art, the motor for the first wrist element is arranged parallel to the second axis, therefore, the motor may interfere with the device for the work tool. In the invention, by using the hypoid gear, while obtaining the high reduction ratio with a single-stage reduction, the motor for the first wrist element is positioned at the point shifted toward the wrist flange relative to the first axis, along the longitudinal direction of the forearm, within the area between the forearm and the upper arm, by arranging the rotation axis of the motor for the first wrist element perpendicular to the second axis, for transmitting the rotation torque to an output shaft of the reducer. By using the hypoid gear for the drive mechanism, it is not necessary to use an expensive speed reducer or multistage gears. Also, the device for the work tool is mounted on the forearm, the device hardly interferes with external equipment. Therefore, while using an inexpensive configuration, the problem of the prior art regarding interference between the motor for the first wrist element and the device for the work tool may be resolved and the mounting position of the device may be freely adjusted. Further, a wide operating area for maintenance of the device may be obtained.

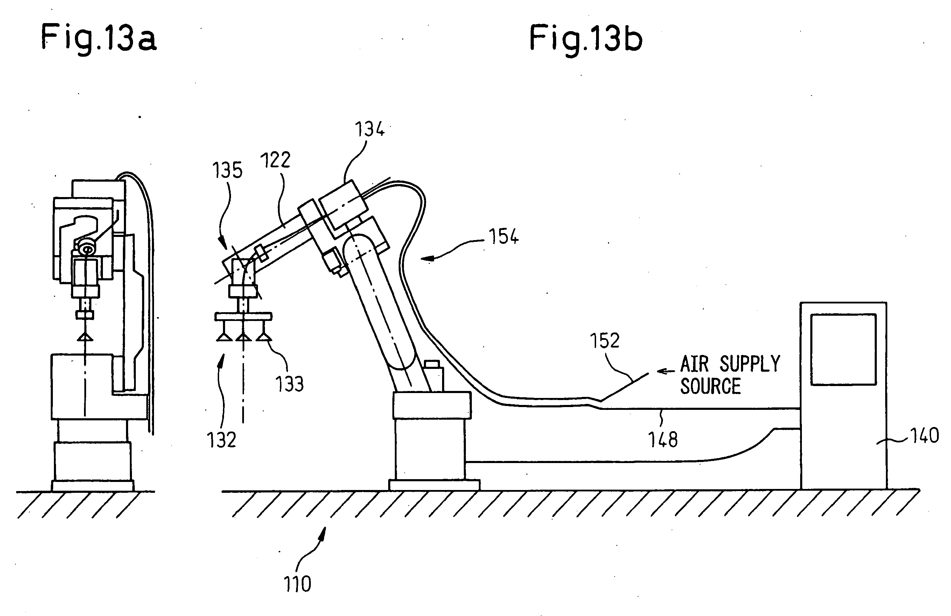

Figs. 13a and 13b are front and side views, respectively, showing a handling system 110 according to a second embodiment of a robot system having an arm driving mechanism of the invention. In comparison with the welding robot 10 of Fig. 1, the wire feeder 34 is replaced with an electromagnetic valve box 134 containing an electromagnetic valve (not shown), and the welding torch 34 replaced with a hand 132. Accordingly, a signal line 148 and an air tube 152, as an umbilical member 154, are connected to the box 134. Also, between the hand 132 and the box 134, a signal line and an air tube are connected for controlling the hand 132 by means of the electromagnetic valve. A robot controller 140 controls the electromagnetic valve via the signal line 148, and the electromagnetic valve supplies air to the hand 132 corresponding to a signal. The hand has an adsorbing pad or an air gripper 133 attached thereto, configured to be driven by the supplied air, in order to adsorb or grip an object or a workpiece to be handled. The signal line 148 is also used for feeding back a signal of the adsorption or the gripping to the robot controller 140. In the handling robot 110, the electromagnetic valve box 134 may be mounted on a front end 135 of a wrist element. In this case, the umbilical member 154 extending from the robot controller 140 is directly connected to the electromagnetic valve box 134 on the front end 135. Further, since the signal line and the tube connected to the hand 132 are relatively thin, the line and the tube may be arranged within a mechanical unit of the robot 110 and connected to the electromagnetic valve box on the front end of the wrist element.

Although Figs. 13a and 13b show the arrangement in which the umbilical member 154 extends along the lateral side of the first wrist element 122, the umbilical member may pass through hollow holes, formed in the vertical portion of the forearm and the first wrist element, similar to the first embodiment.

Due to the above configuration, even when the umbilical member is thick or difficult to be twisted, and/or the extracting position of the cable from the work tool control device such as a wire feeder is widely biased, the umbilical member may be selectively arranged within the hollow hole or along the outside of the forearm. Also, since the operating area for maintenance of the work tool control device may be a wide open area, maintenance work may be easily carried out.

According to the present invention, the work tool control device, such as a wire feeder may be mounted on the forearm so as not to project outward, and the mounting position thereof may be adjusted such that the extracting portion of the umbilical member of the device is positioned at the optimum position relative to the forearm. Simultaneously, the operating area for maintenance of the device is a wide open area for facilitating maintenance work. The umbilical member may be arranged within the hollow portion or along the lateral side of the first wrist element, alternatively. Therefore, the arrangement of the umbilical member may be suitably selected corresponding to the characteristic and/or the constitution thereof.

Generally, the work tool control device has a rectangular box shape, since the device is required to contain a drive source or the like for the work tool. According to the invention, by forming the forearm so as to have the L-shaped recess and mounting the work tool control device on the bottom portion of the recess, the area above the bottom portion may be effectively utilized.

In order to enlarge the area for mounting the work tool control device, it is necessary to reduce the thickness of the speed reducer of the first wrist element in the direction of the second axis, and simultaneously, to lengthen the length of the vertical portion of the forearm. In the invention, by using a set of hypoid gears as a final output part of the speed reducer for the first wrist element, the thickness of the speed reducer along the second axis may be reduced. Also, since the power transmission shaft is connected to the hypoid gear, the length of the vertical portion of the forearm may be suitably adjusted by just adjusting the length of the shaft.

According to the invention, a part of the forearm may effectively relax the bending stress in the forearm generated by rotation. Further, by covering the lateral sides of the motor for the first wrist element in relation to the first axis by using a part of the forearm, the motor may be protected when interfering with external equipment.

According to the invention, even when the first wrist element is rotated 180 degrees so as to locate the umbilical member on the opposite side in relation to the first wrist element, the orientations of the other components may not substantially changed.

According to the invention, the symmetric property of the umbilical member may be improved when the first wrist element is rotated.

According to the invention, even by handling the cable in a simple way, interference between the umbilical member and the cable in the mechanical unit may be avoided, while maintaining range of movement of the forearm.

Also, according to the invention, when the umbilical member is arranged along the lateral side of the first wrist element without passing through the hollow portion, the umbilical member may gradually extends to the second axis. Therefore, the umbilical member may wind around the forearm without being subjected to a large force, even when the first wrist element is rotated.

While the invention has been described with reference to specific embodiments chosen for the purpose of illustration, it should be apparent that numerous modifications could be made thereto, by one skilled in the art, without departing from the basic concept and scope of the invention.

## Claims

1. A drive mechanism for a robot arm, comprising:
- an upper arm (14);
- a forearm (18) connected to the front end of the upper arm (14) and rotatable about a first axis (16) generally perpendicular to the longitudinal direction of the upper arm (14);
- a first wrist element (22) connected to the front end of the forearm (18) and rotatable about a second axis (20) generally coinciding with the longitudinal direction of the forearm (18) and having a hollow portion (84) through which the second axis (20) extends;
- a work tool (32) positioned on the front side of the first wrist element (22);
- a control device (34) for the work tool, to which an umbilical member (54) for supplying power, a signal or material to the work tool (32) is connected; and
- a motor (70) and a speed reducer (72) for rotating the first wrist element (22), the motor (70) and the speed reducer (72) being positioned in the forearm (18),
wherein the umbilical member (54) is arranged between the control device (34) for the work tool and the work tool (32), such that the umbilical member (54) extends either through the hollow portion (84) of the first wrist element (22) or along the outside surface of the first wrist element (22),
**characterized in that** the motor (70) for the first wrist element (22) is positioned in the area between the forearm (18) and the upper arm (14), such that the rotation axis of the motor (70) is perpendicular to the second axis (20) and positioned nearer the front end of the forearm (18) in relation to the first axis (16), the forearm (18) having an L-shaped recess (64, 66) viewed in the direction of the first axis (16), the recess (64, 66) having a bottom portion (66) on which the control device (34) is positioned and a vertical portion (64) to which the first wrist element (22) is connected, constituting the recess, the motor (70) and the speed reducer (72) for the first wrist element (22) being arranged on the vertical portion (64) of the recess, and a motor (74) and a speed reducer (76) for the forearm (18) being arranged on the bottom portion (66) of the recess.

2. The drive mechanism according to claim 1, **characterized in that** the speed reducer (72) for the first wrist element (22) has at least one set of hypoid gears including an input hypoid gear (92) and an output hypoid gear (94), the output hypoid gear (94) being positioned coaxially with the second axis (20) and connected to the first wrist element (22), the input hypoid gear (92) being connected to the motor (70) for the first wrist element (22) via a power transmission shaft (90) extending generally perpendicular to the surface of the bottom portion (66) of the forearm (18).

3. The drive mechanism according to claim 1 or 2, **characterized in that** the lateral side of the motor (70) for the first wrist element (22) in relation to the first axis (16) is covered by a part of the forearm (18).

4. The drive mechanism according to one of the preceding claims, further comprising a second wrist element (26) connected to the first wrist element (22) and rotatable about a third axis (24) generally orthogonal to the second axis (20); and a third wrist element (30) connected to the second wrist element (26) and rotatable about a fourth axis (28) generally orthogonal to the third axis (24), the work tool (32) being attached to the third wrist element (30),
**characterized in that** the first, second and third wrist elements (22, 26, 30) are positioned such that the second, third and fourth axes (20, 24, 28) intersect at one point.

5. The drive mechanism according to one of the preceding claims, **characterized in that** the first wrist element (22) is configured to be axisymmetrical in relation to the second axis (20).

6. The drive mechanism according to one of the preceding claims, further comprising a cable (48, 52) within a mechanical unit of the robot, connected to the control device (34), the cable (48, 52) being drawn from the lateral side in the upper part of the upper arm (14) and introduced into the mechanical unit at the lateral side of the forearm (18), near a connecting point of the vertical and bottom portions (64, 66) of the forearm (18).

7. The drive mechanism according to one of the preceding claims, **characterized in that** the first wrist element (22) has a hollow portion (85) provided with a surface (85a) inclined relative to the second axis (20).

## Patentansprüche

1. Antriebsmechanismus für einen Roboterarm aufweisend:
- einen oberen Arm (14);
- einen Vorderarm (18), der mit einem vorderen Ende des oberen Arms (14) verbunden und um eine im Wesentlichen senkrecht zur Längsrichtung des oberen Arms (14) verlaufende ersten Achse (16) drehbar ist;
- ein erstes Gelenkelement (22), das mit dem vorderen Ende des Vorderarms (18) verbunden und um eine im Wesentlichen mit der Längsrichtung des Vorderarms (18) übereinstimmenden zweite Achse (20) drehbar ist, wobei das erste Gelenkelement (22) einen hohlen Abschnitt (84) umfasst, durch den sich die zweite Achse (20) erstreckt;
- ein Bearbeitungswerkzeug (32), das an der Frontseite des ersten Gelenkelements (22) angeordnet ist;
- eine Steuervorrichtung (34) für das Bearbeitungswerkzeug, die mit einem Versorgungselement (54) zum Zuführen von Strom, Signalen, oder Material zu dem Bearbeitungswerkzeug (32) verbunden ist; und
- einen Motor (70) und einen Drehzahlminderer (72) zum Drehen des ersten Gelenkelements (22), wobei der Motor (70) und der Drehzahlminderer (72) in dem Vorderarm (18) angeordnet sind, und wobei das Versorgungselement (54) zwischen der Steuervorrichtung (34) für das Bearbeitungswerkzeug und dem Bearbeitungswerkzeug (32) derart angeordnet ist, dass sich das Versorgungselement (54) entweder durch den hohlen Abschnitt (84) des ersten Gelenkelements (22) oder entlang der Außenfläche des ersten Gelenkelements (22) erstreckt,
**dadurch gekennzeichnet, dass** der Motor (70) für das erste Gelenkelement (22) in einem Bereich zwischen dem Vorderarm (18) und dem oberen Arm (14) derart angeordnet ist, dass die Rotationsachse des Motors (17) senkrecht zu der zweiten Achse (20) verläuft und näher an dem vorderen Ende des Vorderarms (18) bezüglich der ersten Achse angeordnet ist, wobei der Vorderarm (18) eine aus Richtung der ersten Achse (16) betrachtete L-förmige Ausnehmung (64, 66) aufweist, wobei die Ausnehmung (64, 66) einen Bodenabschnitt (66), an dem die Steuervorrichtung (34) angeordnet ist, und einen vertikalen Abschnitt (64) aufweist, mit dem das erste Gelenkelement (22) verbunden ist, wobei der Bodenabschnitt (66) und der vertikale Abschnitt (64) die Ausnehmung bilden, und wobei der Motor (70) und der Drehzahlminderer (72) für das erste Gelenkelement (22) an dem vertikalen Abschnitt (64) der Ausnehmung angeordnet sind, und wobei ein Motor (74) und ein Drehzahlminderer (76) für den Vorderarm (18) an dem Bodenabschnitt (66) der Ausnehmung angeordnet sind.

2. Antriebsmechanismus nach Anspruch 1,
**dadurch gekennzeichnet, dass** der Drehzahlminderer (72) für das erste Gelenkelement (22) wenigstens einen Satz hypoidverzahnter Kegelräder aufweist, die ein Antriebshypoidzahnrad (92) und ein Abtriebshypoidzahnrad (94) aufweisen, wobei das Abtriebshypoidzahnrad (94) koaxial zu der zweiten Achse (20) positioniert und mit dem ersten Gelenkelement (22) verbunden ist, wobei das Antriebshypoidzahnrad (92) mit dem Motor (70) für das erste Gelenkelement (22) über eine Kraftübertragungswelle (90) verbunden ist, die sich im Wesentlichen senkrecht zu der Fläche des Bodenabschnitts (66) des Vorderarms (18) erstreckt.

3. Antriebsvorrichtung nach Anspruch 1 oder 2,
**dadurch gekennzeichnet, dass** die laterale Seite des Motors (70) für das erste Gelenkelement (22) mit Bezug auf die erste Achse (16) und durch einen Abschnitt des Vorderarms (18) überdeckt ist.

4. Antriebsmechanismus nach einem der vorangehenden Ansprüche,
ferner aufweisend ein zweites Gelenkelement (26), das mit dem ersten Gelenkelement (22) verbunden und um eine im Wesentlichen orthogonal zu der zweiten Achse (20) verlaufenden dritten Achse (24) drehbar ist; und ein drittes Gelenkelement (30), das mit dem zweiten Gelenkelement (26) verbunden und um eine im Wesentlichen zu der dritten Achse (24) orthogonalen vierten Achse (28) drehbar ist, wobei das Bearbeitungswerkzeug (32) an dem dritten Gelenkelement (30) angebracht ist,
**dadurch gekennzeichnet, dass** die ersten, zweiten und dritten Gelenkelemente (22, 26, 30) derart positioniert sind, dass sich die zweiten, dritten und vierten Achsen (20, 24, 28) in einem Punkt schneiden.

5. Antriebsmechanismus nach einem der vorangehenden Ansprüche,
**dadurch gekennzeichnet, dass** das erste Gelenkelement bezüglich der zweiten Achse (20) achssymmetrisch ausgebildet ist.

6. Antriebsvorrichtung nach einem der vorangehenden Ansprüche,
ferner aufweisend ein Kabel (48, 52) innerhalb einer mechanischen Einheit des Roboters, das mit der Steuervorrichtung (34) verbunden ist, wobei das Kabel (48, 52) von der lateralen Seite in den oberen Abschnitt des oberen Arms (14) eingezogen und in die mechanische Einheit an der lateralen Seite des Vorderarms (18) nahe eines Verbindungspunktes der vertikalen und des Bodenabschnitts (64, 66) des Vorderarms (18) eingeführt ist.

7. Antriebsmechanismus nach einem der vorangehenden Ansprüche,
**dadurch gekennzeichnet, dass** das erste Gelenkelement (22) einen hohlen Abschnitt (85) aufweist, der mit einer relativ zu der zweiten Achse (20) geneigt verlaufenden Fläche (85a) versehen ist.

## Revendications

1. Mécanisme d'entraînement pour un bras de robot, comprenant:
- un bras supérieur (14) ;
- un avant-bras (18) raccordé à l'extrémité avant du bras supérieur (14) et rotatif autour d'un premier axe (16) généralement perpendiculaire à la direction longitudinale du bras supérieur (14) ;
- un premier élément de poignet (22) raccordé à l'extrémité avant de l'avant-bras (18) et rotatif autour d'un deuxième axe (20) coïncidant généralement avec la direction longitudinale de l'avant-bras (18) et comportant une partie creuse (84) à travers laquelle s'étend le deuxième axe (20) ;
- un outil de travail (32) positionné sur le côté avant du premier élément de poignet (22) ;
- un dispositif de commande (34) pour l'outil de travail, auquel un élément ombilical (54) destiné à délivrer de la puissance, un signal ou un matériau vers l'outil de travail (32) est raccordé ; et
- un moteur (70) et un réducteur de vitesse (72) destinés à faire tourner le premier élément de poignet (22), le moteur (70) et le réducteur de vitesse (72) étant positionnés dans l'avant-bras (18), dans lequel l'élément ombilical (54) est disposé entre le dispositif de commande (34) pour l'outil de travail et l'outil de travail (32), d'une manière telle que l'élément ombilical (54) s'étend soit à travers la partie creuse (84) du premier élément de poignet (22) soit le long de la surface extérieure du premier élément de poignet (22),
**caractérisé en ce que** le moteur (70) pour le premier élément de poignet (22) est positionné dans la zone entre l'avant-bras (18) et le bras supérieur (14), d'une manière telle que l'axe de rotation du moteur (70) est perpendiculaire au deuxième axe (20) et positionné plus près de l'extrémité avant de l'avant-bras (18) par rapport au premier axe (16), l'avant-bras (18) comportant un évidement en forme de L (64, 66) pouvant être vu dans la direction du premier axe (16), l'évidement (64, 66) comportant une partie de fond (66) sur laquelle le dispositif de commande (34) est positionné et une partie verticale (64) à laquelle est raccordé le premier élément de poignet (22), constituant l'évidement, le moteur (70) et le réducteur de vitesse (72) pour le premier élément de poignet (22) étant disposés sur la partie verticale (64) de l'évidement, et un moteur (74) et un réducteur de vitesse (76) pour l'avant-bras (18) étant disposés sur la partie de fond (66) de l'évidement.

2. Mécanisme d'entraînement selon la revendication 1, **caractérisé en ce que** le réducteur de vitesse (72) pour le premier élément de poignet (22) comporte au moins un jeu d'engrenages hypoïdes comprenant un engrenage hypoïde d'entrée (92) et un engrenage hypoïde de sortie (94), l'engrenage hypoïde de sortie (94) étant positionné coaxiallement par rapport au deuxième axe (20) et raccordé au premier élément de poignet (22), l'engrenage hypoïde d'entrée (92) étant raccordé au moteur (70) pour le premier élément de poignet (22) via un arbre de transmission de puissance (90) s'étendant généralement perpendiculaire à la surface de la partie de fond (66) de l'avant-bras (18).

3. Mécanisme d'entraînement selon la revendication 1 ou 2, **caractérisé en ce que** le côté latéral du moteur (70) pour le premier élément de poignet (22) par rapport au premier axe (16) est recouvert par une partie de l'avant-bras (18).

4. Mécanisme d'entraînement selon l'une quelconque des revendications précédentes, comprenant en outre un deuxième élément de poignet (26) raccordé au premier élément de poignet (22) et rotatif autour d'un troisième axe (24) généralement orthogonal au deuxième axe (20) ; et un troisième élément de poignet (30) raccordé au deuxième élément de poignet (26) et rotatif autour d'un quatrième axe (28) généralement orthogonal au troisième axe (24), l'outil de travail (32) étant fixé au troisième élément de poignet (30),
**caractérisé en ce que** les premier, deuxième et troisième éléments de poignet (22 26, 30) sont positionnés d'une manière telle que les deuxième, troisième et quatrième axes (20, 24, 28) s'intersectent au niveau d'un point.

5. Mécanisme d'entraînement selon l'une quelconque des revendications précédentes, **caractérisé en ce que** le premier élément de poignet (22) est configuré pour être axisymétrique par rapport au deuxième axe (20).

6. Mécanisme d'entraînement selon l'une quelconque des revendications précédentes, comprenant en outre un câble (48, 52) à l'intérieur d'une unité mécanique du robot, raccordé au dispositif de commande (34), le câble (48, 52) étant tiré du côté latéral dans la partie supérieure du bras supérieur (14) et introduit dans l'unité mécanique au niveau du côté latéral de l'avant-bras (18), près d'un point de raccordement des parties verticale et de fond (64, 66) de l'avant-bras (18).

7. Mécanisme d'entraînement selon l'une quelconque des revendications précédentes, **caractérisé en ce que** le premier élément de poignet (22) comporte une partie creuse (85) munie d'une surface (85a) inclinée par rapport au deuxième axe (20).
